# EUROPÄISCHE PATENTANMELDUNG

(11) **EP 1 734 389 A1**
(43) Veröffentlichungstag der Anmeldung: **20.12.2006**
(21) Anmeldenummer: 06115269.0
(22) Anmeldetag: 12.06.2006
(51) Int. Cl.: G02B 6/00

(54) **Beleuchtungsmodul für die Hinterleuchtung und Ausleuchtung von hohlen Stellrädern, Markierungen oder zur Funktionsanzeige**

(30) Priorität: 15.06.2005 DE 102005027530
(71) Anmelder: Dr. Schneider Engineering GmbH, 96317 Kronach (DE)
(72) Erfinder: Uhlenbusch, Olaf c/o Dr. Schneider Engineering, 96275, Marktzeuln (DE); Pestke, Joachim c/o Dr. Schneider Engineering, 71732, Tamm (DE)
(74) Vertreter: Kinnstätter, Klaus

(57) **Zusammenfassung**

Die Erfindung betrifft ein Beleuchtungsmodul für die Hinterleuchtung oder Ausleuchtung von lichtdurchlässigen Zonen, von Markierungen oder Feldern an der Umfangsfläche von hohlen Stellrädern, in Flächenabdeckungen oder zur Funktionsanzeige unter Verwendung mindestens einer Lichtquelle (9), wobei in dem Beleuchtungsmodul mehrteilige Leiterstege (2,3,4) in einen Träger aus Kunststoff eingelegt oder eingebettet sind und zwischen die Leiterstege mindestens die eine Lichtquelle (9) geschaltet ist und oberhalb der Lichtquelle (9) an dem Träger ein Lichtleiter (11) befestigt ist, wobei das Licht entsprechend der Ausformung und Ausbildung der Oberfläche des Lichtleiters (11) aus mindestens einer Lichtaustrittsfläche (14) austritt.

## Beschreibung

Die Erfindung betrifft ein Beleuchtungsmodul für die Hinterleuchtung oder Ausleuchtung von hohlen Stellrädern mit lichtdurchlässigen Zonen an der Umfangsfläche, von Markierungen oder Feldern in Flächenabdeckungen oder zur Funktionsanzeige unter Verwendung von mindestens einer Leuchtdiode sowie ein Verfahren zur Herstellung eines Beleuchtungsmoduls.

Ein Beleuchtungsmodul der gattungsgemäßen Art sowie ein hohles Stellrad mit lichtdurchlässigen Zonen in der Mantelwand sind aus der DE 103 39 833 A1 bekannt. Das darin beschriebene Stellrad mit mechanischer Kupplungseinrichtung zur Herstellung einer Wirkverbindung mit mindestens einem mechanischen Funktionseinstellelement und/oder einem elektrischen Steuerelement ist innen hohl ausgebildet und weist mindestens eine Nabe, Welle oder einen Zapfen zur drehbaren Lagerung in Lagerschalen, Lagerbohrungen oder auf einem Lagerzapfen eines Lagerhalters auf. Mindestens ein Umfangsabschnitt der Mantelwand des Stellrades ist in Form einer lichtdurchlässigen Anzeigezone, als hinterleuchtbare Signalisierungsfläche oder mit Symbolen versehen, vorgesehen. Das Stellrad weist am Umfang eine segmentförmige Öffnung oder zentral eine offene Nabe oder hohle Welle auf, in die eine Lampe einsetzbar ist, die das Licht in den Hohlraum des Stellrades abgibt. Die Lampe ist an einem Lampenträger fixiert, der in den Öffnungsabschnitt des Stellrades einschiebbar und an einem Gehäuseteil befestigbar ist, in welchem sich das Stellrad befindet.

Aus der DE 201 03 007 U1 ist eine Schaltanzeigeeinrichtung eines Schalters zum Anzeigen der Position des Schalters bekannt, die ein Gehäuse und eine Vielzahl von lichtimitierenden Elementen aufweist, die jeweils in den Ecken in dem Gehäuse angeordnet sind. Des Weiteren sind zwei Metallkontaktstifte vorgesehen, die parallel zueinander angeordnet und mit dem Gehäuse mittels Spritzgießen verbunden sind, wobei die Metallkontaktstifte jeweils gebogene mittlere Abschnitte aufweisen, die aneinander angenähert sind und Seitenkontakte und einen mittigen Kontakt aufweisen. Der Zentralkontakt, der an einem Metallkontaktstift angebracht und in der Aufnahmekammer vorgesehen ist, befindet sich zwischen den beiden Metallkontaktstiften und den Seitenkontakten. Weiterhin ist ein Chipmodul vorgesehen, welches mit der Innenseite des Gehäuses gekoppelt ist und einen lichtdurchlässigen Abdeckschirm aufweist.

Aus der DE 43 11 937 A1 ist zur Hinterleuchtung von schmalen Anzeigefeldern eine lichtimitierende Vorrichtung bekannt, die Lumineszenzdioden aufweist. Die Vorrichtung ist aus einem lichtstreuenden, die Lumineszenzdioden aufnehmenden Leuchtkörper aufgebaut, der auf eine Leiterplatte aufgesetzt ist, an der die Leuchtdiode befestigt ist.

Aus der DE 202 16 833 U1 ist eine Beleuchtungsanordnung mit einer Lampe, die zwischen zwei länglichen elektrischen Leitern angeschlossen ist, bekannt. Die Lampe ist eine lichtimitierende Diode (LED) mit einem Halbleiterbereich und einer ersten Umhüllung, wobei jeder elektrische Pol der LED jeweils mit einer einzelnen Metallzunge elektrisch und mechanisch verbunden ist. Die Metallzungen sind derart plastisch, flexibel bzw. biegsam, dass diese durch einfaches Verbiegen und/oder Verpressen an den entsprechenden elektrischen Leiter elektrisch und mechanisch angeschlossen sind.

Ein Beleuchtungsverfahren und ein Beleuchtungssystem zur Ausleuchtung von Hohlkörpern, wie Schildern, Beschriftungen, Buchstaben, insbesondere Reliefbuchstaben unter Verwendung von LEDs ist aus der DE 100 52 380 A1 bekannt. Die LEDs sind dabei auf Leiterplatten aufgebracht.

Ausgehend vom bekannten Stand der Technik, liegt der Erfindung die Aufgabe zugrunde, einen Träger für eine Lampe bzw. für ein Beleuchtungselement als universell einsetzbares Beleuchtungsmodul weiter zu entwickeln, das generell für Hinterleuchtung und Ausleuchtung von hohlen Stellrädern mit lichtdurchlässigen Zonen, von Markierungen und/oder Feldern in Flächenabdeckungen und zur Funktionsanzeige wahlweise einsetzbar ist, ohne von der baulichen Anordnung abgehen und gesonderte Ausbildungen und Formgebungen vornehmen zu müssen.

Gelöst wird die Aufgabe durch Ausgestaltung des Beleuchtungsmoduls gemäß der im Anspruch 1 angegebenen Lehre.

Verfahren zur Herstellung eines Beleuchtungsmoduls sind in den Ansprüchen 13 und 14 angegeben.

Vorteilhafte Ausgestaltungsformen des Beleuchtungsmoduls nach der Erfindung sind im Detail in den Unteransprüchen 2 bis 12 angegeben, vorteilhafte Weiterbildungen der Verfahren in den Unteransprüchen 15 bis 19.

Anspruch 1 gibt einen modularen Aufbau eines Beleuchtungsmoduls an, der eine universelle Verwendung ermöglicht. Der Träger, der beispielsweise als separates Kunststoffteil hergestellt werden kann, dient der Aufnahme der aus Metall bestehenden, flächigen Leiterstege einerseits und zur Aufnahme des Lichtleiters andererseits, der über die Leuchtdiode aufgesetzt wird und so ausgebildet ist, dass er in gewünschter Weise das Licht leitet oder auch durchdringen lässt. Es versteht sich dabei von selbst, dass die Anbringung eines solchen Beleuchtungsmoduls in einem Gehäuse, das beispielsweise ein Stellrad oder vorderseitig eine Anzeigefläche aufweist, so auszubilden ist, dass eventuell seitlich austretendes Licht nicht in unerwünschter Weise durch eine Montagespalte dringt oder eine unerwünschte Hinterleuchtung bewirkt. Durch die Einbringung mehrteiliger Leiterstege können verschiedene Beschaltungen mit Leuchtdioden und Bauelementen direkt vorgenommen werden. Die vorbestückten Leiterstege bilden ein einlegbares Netz. Sie können aber auch unbestückt eingelegt und nachträglich bestückt werden.

Durch den modularen Aufbau ist es möglich, den gleichen Träger für unterschiedliche Lichtleiter zu verwenden. Diese Lichtleiter bestehen ebenfalls aus Kunststoff und weisen in bekannter Weise lichtleitende Eigenschaften auf, sowie eine Oberfläche, die das Licht entweder partiell und/oder diffus austreten lässt oder reflektiert, um es gezielt aus einer Austrittsfläche austreten zu lassen. Es ist somit möglich, unterschiedliche Lichtleiterformen, entsprechend den gewünschten Aufgaben zu wählen, um diese dann mit dem Träger zu vereinen.

Durch den modularen Aufbau ist es sogar möglich, in einer sogenannten Insert-Technik die Leiterstege direkt am Träger durch Umspritzung festzulegen und so ein Verbundteil herzustellen, um danach an die Leiterstege in gewünschter Weise die elektronischen Bauelemente, wie zum Beispiel SMT-Widerstände oder SMT-Leuchtdioden, als Brückenelemente zu kontaktieren, vorzugsweise mittels Induktionslöten. Selbstverständlich können auch andere flache Bauelemente mit entsprechenden Anschlussfahnen an den offenen löt- oder schweißbaren Stellen der Leiterstege angebracht werden. Werden mehrere Leiterstege verwendet, so empfiehlt es sich, diese als Stanzbiegeteile vorzufertigen, wobei die Leiterstege über Verbindungsstege miteinander verbunden sind. Diese Verbindungsstege werden nach dem Umspritzen der Leiterstege in der Insert-Technologie durch Trennverfahren, wie z. B. Fräsen, Schneiden, Sägen oder Stanzen, entfernt. Es werden danach in gewünschter Weise die Bauelemente als Brückenelemente aufgebracht.

Grundsätzlich können die Leiterstege aber auch einzeln in einen vorgefertigten Träger eingesetzt werden. Zu diesem Zweck können beispielsweise Zentrierbohrungen an den Leiterstegen vorgesehen sein, mittels derer die Leiterstege auf vorstehende Noppen des Trägers aufsetzbar sind. Durch Nietwarmverformung der vorstehenden Noppen werden dann die Leiterstege an dem Träger gehalten. Auch lassen sich die elektronischen Bauelemente an den Leiterstegen vor der Montage anlöten. Zu diesem Zweck müssen die einzelnen Leiterstege in eine Aufnahmevorrichtung eingelegt und die Verbindungen mit den elektronischen Bauelementen hergestellt werden. Ein solcher Verbund ist ebenfalls in gleicher Weise mit den Zentrierbohrungen in den Leiterstegen auf die Aufnahmezapfen aufsetzbar oder ohne Zentrierbohrungen in den Träger einlegbar und hieran durch Wärmeumformung der vorstehenden Abschnitte der Zapfen oder durch Nieten oder mittels Schrauben befestigbar.

Die Leiterstege können herausgeführte Endabschnitte aufweisen, die zugleich als Stecker dienen. Sie können aber auch Kontaktierflächen oder Kontaktiergeometrien in Form von ausgebogenen Ösen aufweisen, an die Stromversorgungsleitungen anlötbar sind. In diesem Fall empfiehlt es sich, an dem Träger in Längsrichtung verlaufende Nuten- oder Rippenpaare zur Aufnahme und Fixierung der elektrischen Zuleitungen vorzusehen. Diese sind beispielsweise an der Unterseite angebracht. Beim Umspritzen durch Anwendung der Insert-Technologie kann der Steckerbereich vollständig eingebettet werden, so dass eine elektrische Isolation gewährleistet ist. Dies ist ebenfalls durch Abstandsbildung zwischen den Leiterstegen und durch Vortreten der Kunststoffmasse zwischen den Leiterstegen herstellbar. Der Träger kann zugleich Rastnasen aufweisen, um durch einfache Rastung den Lichtleiter daran befestigen zu können. Das Bauteil kann grundsätzlich relativ schmal ausgebildet sein und ist im Prinzip bezüglich der Breite im Aufnahmebereich des Lichtleiters durch die verwendete Größe der Bauelemente bestimmt, die als Brückenelemente zwei benachbarte Leiterstege, die parallel oder aber auch in Reihe angeordnet sein können, überbrücken. Ebenso kann das Bauteil insgesamt flach ausgebildet sein, da die Lichtleiter in flacher Bauweise aus Kunststoff herstellbar sind. Diese müssen im Bereich der Leuchtdiode oder bei Verwendung mehrerer Leuchtdioden in diesen Bereichen in der Oberfläche so gestaltet sein, dass das Licht in den Lichtleiter eintritt, es sei denn, dass der Lichtleiter zusätzlich einen Durchdringungsspalt aufweist, durch den das Licht in gewünschter Weise direkt austreten soll.

Soll das Beleuchtungsmodul nach der Erfindung für die Ausleuchtung eines Stellrades verwendet werden, das im hinteren nicht sichtbaren Bereich am Umfang einen Einführspalt aufweist und um einen bestimmten Winkel, der durch den in den Einführspalt eingesteckten Lichtleiter begrenzt ist, sofern keine anderen Dreh- Begrenzungsmaßnahmen vorgesehen sind, so ist es empfehlenswert, an dem Lichtleiter einen flachen, schmalen Ansatz vorzusehen, der es ermöglicht, einen möglichst großen Stellwinkel einzustellen. Dieser Ansatz wirft sodann den Lichtstrahl durch die vorderseitige Lichtaustrittsöffnung in den Hohlraum des Stellrades. Ein solches Stellrad ist in der DE 103 39 833 A1 beschrieben.

Durch die Entkopplung zwischen LED, die auch durch eine andere Lampe ersetzt sein kann, und Lichtleiter ist es möglich, eine gleichmäßige, gewünschte Abstrahlcharakteristik zu realisieren, ohne das Bauprinzip verlassen zu müssen. Durch die Art und Weise und insbesondere bei Verwendung der Insert-Technik kann ein solches Beleuchtungsmodul in hohen Stückzahlen preiswert gefertigt und mit unterschiedlich ausgeformten Lichtleitern kombiniert werden. Dadurch werden rationelle Großserienfertigungen ermöglicht. Solche Beleuchtungsmodule können beispielsweise im Kraftfahrzeugbereich zur Ausleuchtung und Hinterleuchtung von Anzeigeflächen dienen oder für Stellräder, in Luftdüsen und Klimaregelanlagen im Kraftfahrzeug. Bei entsprechender Ausbildung des Ansatzes an dem Lichtleiter sind sogar punktuelle Ausleuchtungen und gebogen verlegte Lichtleitungen möglich, so dass sie auch als Signalisierungslampen verwendbar sind. Es ist darüber hinaus möglich, Symbole oder Piktogramme auf die Lichtaustrittsflächen des Lichtleiters aufzubringen, beispielsweise durch Feindruck oder Laserung, um diese hervorgehoben zur Anzeige zu bringen.

Durch entsprechende Oberflächenbeschaffenheit des Lichtleiters kann darüber hinaus in gewünschter Weise auch ein diffuser Lichtaustritt punktuell, bereichsweise oder über die Oberfläche verteilt realisiert werden, um größere Flächen ausleuchten zu können. In diesem Fall ist das Beleuchtungsmodul im Wesentlichen parallel zur Anzeigefläche anzubringen. Im Falle der Verwendung in Stellrädern erfolgt die Anordnung senkrecht zur Drehachse des Stellrades in dem Gehäuse.

Der modulare Aufbau hat zudem den Vorteil, dass eine Vormontage, zum Beispiel an einem Träger für Stellräder erfolgen kann, und dass dieser Träger insgesamt in eine Ausnehmung eines Tableaus oder in ein Gehäuse von vorne hineingeschoben und darin verankert wird. Zuvor sind noch die Steckverbindungen aufzustecken, um die gewünschte elektrische Verbindung herzustellen.

Für die Befestigung eines Trägers können Befestigungsausbildungen vorgesehen sein, die sowohl eine Klippbefestigung an Trägerelementen des Gehäuses als auch ein Anschrauben ermöglichen. Hierzu können entweder in dem Träger Durchgangsbohrungen vorgesehen sein oder seitliche Ansätze, die ein Übergreifen mittels Rastnasen ermöglichen. Es können aber auch Rastnasen als solche zum Fixieren in entsprechenden Ausnehmungen an einer Gehäusewand an der Unterseite oder Rückseite angespritzt sein.

Die Bauform des Trägers kann länglich sein, sie kann aber auch rund ausgeprägt sein. Dies hängt jeweils von der Verwendung in Verbindung mit dem auszuleuchtenden Bauelement ab. Auch winklige Ausführungen sind möglich. Die Trennung der Leiterstege bzw. die Trennung der Verbindungsstege von den Leiterstegen kann nach oder vor dem Einlegen in ein Spritzgusswerkzeug vorgenommen werden.

Die Erfindung wird nachfolgend anhand des in der Zeichnung dargestellten Ausführungsbeispiels ergänzend erläutert.

In den Zeichnungen zeigen:
- Figur 1: einen Verbund von Leiterstegen, gefertigt als Stanzbiegeteil in perspektivischer Darstellung,
- Figur 2: einen Träger in der Draufsicht mit eingesetzten Leiterstegen und elektronischen Bauelementen in der Perspektive,
- Figur 3: einen aufsetzbaren Lichtleiter,
- Figur 4: ein Beleuchtungsmodul im zusammengesetzten Zustand in perspektivischer Darstellung und
- Figur 5: die Rückseite des Beleuchtungsmoduls nach Figur 4.

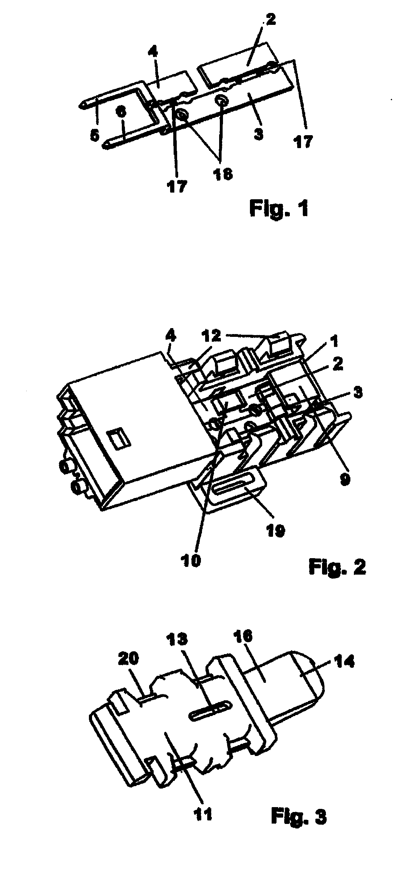

In Figur 1 ist ein Stanzbiegeteil dargestellt, das aus Leiterstegen 2, 3, 4 besteht. Der Leitersteg 3 ist durchgehend ausgebildet und weist Zentrierbohrungen 18 auf. Die Leiterstege 2 und 4 sind parallel hierzu angeordnet und in Längsrichtung beabstandet ausgeführt. Die Leiterstege 2, 3, 4 sind im Verbund über durchtrennbare Verbindungsstege 17 miteinander verbunden. In Längsrichtung ausgestanzt sind an den Leiterstegen 3 und 4 Steckansätze 5 und 6 für einen elektrischen Steckverbinder angeformt, die als Alternative vorgesehen sind und wahlweise auch weggelassen oder abgewinkelt herausgeführt werden können.

Der in Figur 1 dargestellte Leiterverbund wird in eine Spritzform mit Zentrierbohrungen eingesetzt. Diese Spritzform beinhaltet die gesamte Form des Trägers 1, der in Figur 2 dargestellt ist. In der Insert-Technik wird mit Kunststoff umspritzt, wobei die Oberflächen der Leiterstege 2, 3, 4 im Bestückungsbereich freigelegt sind, wie aus Figur 2 ersichtlich ist. An dem Träger 1 sind ferner Rastnasen 12 als federnde Teile mit angeformt. Ferner ist der Steckerbereich vollständig umspritzt und es sind am Boden seitliche Ansätze 19 vorgesehen, um eine Klippmontage des Trägers 1 an nicht dargestellten Gehäuseteilen oder Tragflächen im Montagebereich des Einsatzgehäuses, in welches das Beleuchtungsmodul eingesetzt werden soll, vornehmen zu können. Es können aber auch Durchgangsbohrungen sowohl am Ansatz 19 als auch im Träger 1 vorgesehen sein, um ein Anschrauben zu ermöglichen. Die federnden Rastnasen 12 sind vorgesehen, um den in Figur 3 dargestellten Lichtleiter 11 durch Rasten befestigen zu können. Der Lichtleiter 11 ist ein Kunststoffformteil aus einem lichtleitfähigen Kunststoff, der vorzugsweise auch eine bestimmte Oberflächenbehandlung oder eine bestimmte Oberfläche aufweist, um in gewünschter Weise Licht zu reflektieren oder diffus austreten zu lassen. Im dargestellten Ausführungsbeispiel ist ein Lichtaustrittsschlitz 13 ebenfalls vorgesehen, durch den Licht von der Leuchtdiode 9 auch nach außen austreten kann. Es kann aber eine Kammer mit Lichteintrittsflächen vorgesehen sein, die das gesamte erzeugte Licht der Leuchtdiode 9, die in Figur 2 dargestellt ist, aufnimmt und in gewünschter Weise in den Ansatz 16 des Lichtleiters 11 leitet, der stirnseitig eine Lichtaustrittsfläche 14 aufweist, durch die das Licht auszutreten vermag. Zur Herstellung der Verbindung an dem Träger 1 sind an dem Lichtleiter 11 Rastflächen 20 vorgesehen, die sich in seitlichen Ausnehmungen befinden, um eine leichtere Zuordnung zu den Rastnasen 12 vornehmen zu können. Der Lichtleiter 11 wird bei der Montage auf den Träger 1 aufgedrückt und von den Rastnasen 12 gesichert gehalten. Wie aus Figur 2 ersichtlich ist, sind die Rastnasen 12 in Achsrichtung und quer zur Achsrichtung des Lichtleitelementes vorgesehen. Die in Längsrichtung verlaufenden Rastnasen müssen nicht unbedingt vorgesehen sein, erleichtern aber ein Einsetzen, zu welchem Zweck auf der linken Seite des in Figur 3 dargestellten Lichtleiters ein keilförmiger Endabschnitt ersichtlich ist, mit dem der Lichtleiter zunächst unter die Rastnasen 12, die in Längsrichtung weisen, gestreckt wird, während durch vorderseitiges Herunterdrücken die quer zur Längsrichtung verlaufenden Rastnasen 12 am Träger 1 die Rastflächen 20 übergreifen und den Lichtleiter 11 fixieren. Durch die federnden Rastnasen 12 ist auch eine Demontage möglich.

Nach dem Einbetten der Leiterstege 2, 3, 4 in dem Träger 1 werden die Verbindungsstege 17 durch Stanzen, Fräsen, Sägen oder Schneiden entfernt und die Leuchtdiode 9 als Brückenelement aufgelötet, ebenso ein Widerstand 10 zur Begrenzung des Leuchtdiodenstromes. Der SMT-Widerstand 10 ist in Längsrichtung der Leiterstege 2 und 4 als Brückenelement eingefügt, die Leuchtdiode 9 quer verlaufend und verbindet die Leiterstege 2 und 3.

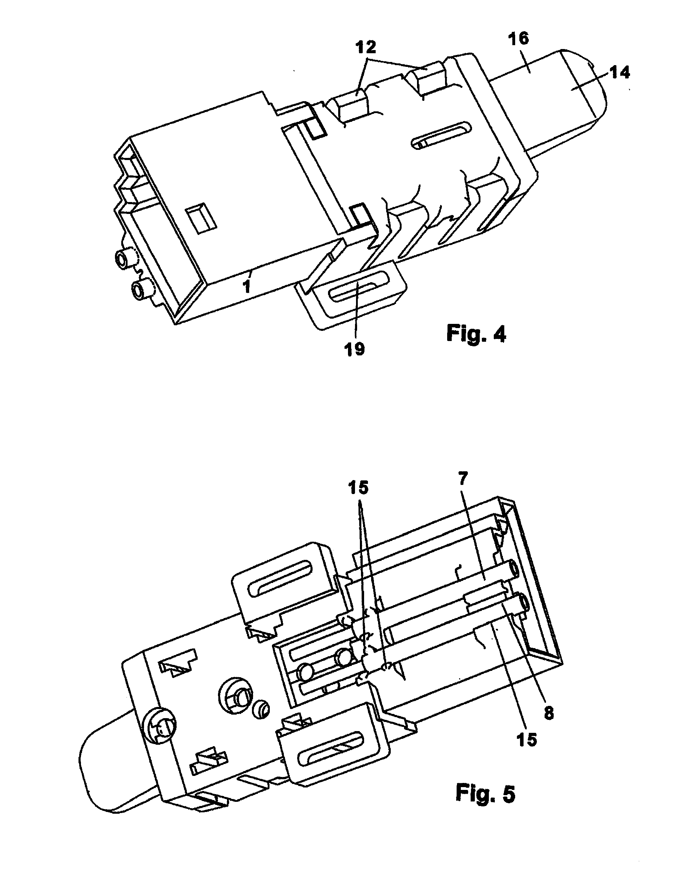

Der montierte Zustand des Beleuchtungsmoduls nach der Erfindung ist in Figur 4 dargestellt. Figur 5 zeigt die Unterseite, aus der ebenfalls ersichtlich ist, dass an der Unterseite vorstehend jeweils zwei Rippenpaare 15 vorgesehen sind, die eine Klippöffnung für die Zuleitungen 7 und 8 bilden, deren Enden durch eine Öffnung an der Unterseite der aus Blech bestehenden Leiterstege 4 und 3 anlötbar sind. Anstelle dieser Zuleitung können aber auch die aus Figur 1 ersichtlichen Steckansätze herausgeführt sein, auf die ein Stecker ansteckbar ist. Dies kann alternativ bereits vorgesehen sein oder es können die Rippenpaare 15 zusätzlich vorgesehen sein, um die Zuleitungen 7 und 8 an die Leiterstege 3 und 4 anlöten zu können.

Die Erfindung ist grundsätzlich an keine Größe des Trägers oder des Lichtleiters gebunden. Auch können parallele Anordnungen des Trägers ausgeformt werden, um größere Lichtleitereinheiten besser von Licht durchflutet aufbringen zu können. Ebenso können die Lichtleiter und/oder deren Ansätze verschiedenste Formen aufweisen.

Die eingesetzten elektronischen Bauelemente 10 sowie die Leuchtdioden 9 werden in bekannter Weise mit den Leiterstegen 2, 3, 4 kontaktiert. Im Falle der Verwendung von SMT-Bauteilen werden diese durch Induktionslöten an den Verbindungsstegen befestigt. Es können aber auch Einzelverlötungen vorgenommen werden. Dies wird insbesondere bei Verwendung von Bauteilen mit Anschlussfahnen praktiziert. Diese können aber auch angeschweißt werden, beispielsweise durch Widerstandsschweißen. Die Stromversorgungsleitung 7, 8 und ggf. auch andere Leitungen, die mit den Leiterstegen 2, 3, 4 zu verbinden sind, werden zweckmäßigerweise durch Widerstandsschweißen mit den Leiterstegen 2, 3, 4 verbunden. Die zur Anwendung kommende Montageart ermöglicht es, vor der Kontaktierung der Bauteile mit den Leiterstegen 2, 3, 4 der Bauteile 9, 10 einen vollautomatisierten Einzelabgleich je Beleuchtungsmodul zwischen der Leuchtdiode 9 und dem Vorwiderstand 10 herzustellen, in dem die Stromaufnahme vor dem Kontaktierungsverfahren gemessen wird, um gegebenenfalls den Vorwiderstände noch austauschen zu können. Auch dies ist automatisierbar. Hierdurch wird erreicht, dass durch Toleranzminimierung der Leuchtdichtewert der Leuchtdiode bei allen Modulen in geringen Toleranzbereichen gehalten werden kann, trotz hoher herstellbedingter Einzeltoleranzen der verwendeten Leuchtdioden. Solche Abgleichverfahren sind an sich bekannt und werden nur in Bezug auf den Erfindungsgegenstand zum Einsatz gebracht.

### Bezugszeichenliste

- 1: Trägerteil
- 2: Leiterstege
- 3: Leiterstege
- 4: Leiterstege
- 5: Steckansatz
- 6: Steckansatz
- 7: Zuleitung
- 8: Zuleitung
- 9: Leuchtdiode
- 10: Bauteil
- 11: Lichtleiter
- 12: Rastverbindung
- 13: Lichtdurchdringungsschlitz
- 14: Lichtaustrittsfläche
- 15: Rippenpaare
- 16: flacher Ansatz
- 17: Verbindungsstege
- 18: Zentrierbohrungen
- 19: Ansätze
- 20: Rastflächen

## Patentansprüche

1. Beleuchtungsmodul für die Hinterleuchtung oder Ausleuchtung von lichtdurchlässigen Zonen, von Markierungen oder Feldern an der Umfangsfläche von hohlen Stellrädern, in Flächenabdeckungen oder zur Funktionsanzeige unter Verwendung mindestens einer Lichtquelle, wobei in dem Beleuchtungsmodul mehrteilige Leiterstege (2, 3, 4) in einen Träger (1) aus Kunststoff eingelegt oder eingebettet sind und zwischen die Leiterstege (2, 3, 4) mindestens die eine Lichtquelle (9) geschaltet ist und oberhalb der Lichtquelle (9) an dem Träger ein Lichtleiter befestigt ist, wobei das Licht entsprechend der Ausformung und Ausbildung der Oberfläche des Lichtleiters (11) aus mindestens einer Lichtaustrittsfläche (14) austritt.

2. Beleuchtungsmodul nach Anspruch 1, **dadurch** gekenn ― zeichnet, dass von den mehrteiligen Leiterstegen (2, 3, 4) mindestens einer einen Anschluss (5, 6) zum Anlöten oder Anstecken mindestens einer Stromversorgungsleitung oder mindestens ein Kontaktierungsstützpunkt zum Kontaktieren mit einer Stromversorgungsleitung (7, 8) aufweist, wobei die Anschlüsse (5, 6) als Ansteckkontakte aus dem Träger (1) geradlinig oder abgewinkelt vorstehend ausgebildet sind.

3. Beleuchtungsmodul nach Anspruch 1, **dadurch** gekenn ― zeichnet, dass der Lichtleiter (11) ein Formteil aus Kunststoff ist und durch Rast- (12) oder Klebeverbindung oder eine andere Verbindungsart an dem Träger (1) befestigt ist und im Bereich der Leuchtdiode (9) oder Lampe entweder einen Lichtdurchdringungsschlitz (13) und/oder eine Lichteinflutfläche aufweist.

4. Beleuchtungsmodul nach Anspruch 1 oder 2, **dadurch gekennzeichnet, dass** der Träger (1) Nuten oder Rippenpaare (15) zur Aufnahme und Fixierung elektrischer Zuleitungen (7, 8) aufweist.

5. Beleuchtungsmodul nach Anspruch 1, **dadurch** gekenn- zeichnet, dass der Lichtleiter (11) einen zungenförmigen, flachen Ansatz (16) aufweist, mit dem er in die radiale Öffnung eines beleuchtbaren, hohlen Stellrades einschiebbar ist.

6. Beleuchtungsmodul nach Anspruch 1, **dadurch** gekenn - zeichnet, dass die Leiterstege (2, 3, 4) über Verbindungsstege (17) verbunden sind, wobei die Leiterstege und die Verbindungsstege als Stanzteil ausgeführt sind, und dass die Verbindungsstege (17) durchtrennbar ausgeführt sind und diese vor dem Einlegen in den Träger (1) oder nach dem Einlegen und Fixieren entfernbar sind.

7. Beleuchtungsmodul nach Anspruch 1, **dadurch** gekenn ― zeichnet, dass mindestens ein Leitersteg (3) Zentrierbohrungen (18) zur Lagefixierung am oder im Träger aufweist, in welche Ansätze am Träger bei der Montage eingreifen oder Kunststoffmasse zur Fixierung eingespritzt ist.

8. Beleuchtungsmodul nach Anspruch 1, 6 oder 7, **dadurch gekennzeichnet, dass** die Leiterstege (2, 3, 4) durch teilweise oder ganzseitige Umspritzung an bestimmten Abschnitten am Träger (1) fixiert sind und dass die Verbindungsstege (17) nach dem Einlegen in ein Spritzgusswerkzeug vor dem Umspritzen oder nach dem Umspritzen mit Kunststoff in einem separaten Trennwerkzeug trennbar oder entfernbar sind.

9. Beleuchtungsmodul nach Anspruch 1 oder 2, **dadurch gekennzeichnet, dass** am Träger (1) Ansätze (19) vorgesehen sind, mittels derer der Träger (1) an Vorrichtungen oder Gehäuseteilen, die in Verbindung mit den auszuleuchtenden Teilen stehen, befestigbar sind.

10. Beleuchtungsmodul nach Anspruch 1 oder 2, **dadurch gekennzeichnet, dass** der Lichtleiter (11) Rastflächen (20) aufweist, die von Rastnasen der Rastansätze (12) am Träger (1) beim Einrasten übergriffen werden.

11. Beleuchtungsmodul nach Anspruch 1, **dadurch gekennzeichnet , dass** weitere elektronische Bauteile (10) und/oder Stromversorgungsleitungen (7, 8) an die Leiterstege (2, 3, 4) angelötet oder angeschweißt sind.

12. Beleuchtungsmodul nach Anspruch 1, **dadurch gekennzeichnet, dass** der Träger (1) eine länglich gestreckte, eine runde oder eine winklige Bauform aufweist.

13. Verfahren zur Herstellung eines Beleuchtungsmoduls nach Anspruch 1, **dadurch gekennzeichnet,**
- **dass** die Leiterstege (2, 3, 4) mit ihren Steckansätzen (5, 6) aus Metall als Stanz- oder Biegeteile hergestellt werden,
- **dass** die Leiterstege (2, 3, 4) an dem Träger (1) befestigt oder in eine, ihrer Kontur entsprechenden Aufnahmevorrichtung eingelegt werden,
- **dass** mindestens die eine Lichtquelle (9) als Brückenelement an die Leiterstege (2, 3, 4) angelötet wird und mit diesen einen Verbund bildet, auf den der Träger (1) aufgesetzt wird,
- **dass** über den Verbund aus Leiterstegen (2, 3, 4) und Bauelementen (10) und Lichtquelle (9) ein separat vorgefertigter Lichtleiter (11) gesetzt und an dem Träger (1) befestigt wird.

14. Verfahren zur Herstellung eines Beleuchtungsmoduls nach Anspruch 1, **dadurch gekennzeichnet,**
- **dass** die Leiterstege (2, 3, 4) mit ihren Steckansätzen (5, 6) aus Metall als Stanz- oder Biegeteile hergestellt werden,
- **dass** die Leiterstege (2, 3, 4) in eine Aufnahme in ein Spritzwerkzeug eingelegt werden,
- **dass** die Leiterstege (2, 3, 4) durch teilweises Umspritzen und/oder durch Ausfüllen und Überspritzen von Zentrierbohrungen an dem durch Spritzen aus Kunststoff ausgeformten Träger (1) befestigt werden,
- **dass** nach dem Umspritzen oder Einbetten mittels Kunststoff die Bauelemente (10) oder Leuchtdioden (9) oder Lampen als Brückenelemente jeweils auf zwei benachbarte Leiterstege überbrückend gelegt und hieran kontaktiert werden und
- **dass** der separat vorgefertigte Lichtleiter (11) in die Rastausnehmung des Trägers (1) eingedrückt und hieran befestigt wird.

15. Verfahren nach Anspruch 13 oder 14, **dadurch** g e - kennzeichnet, dass die Leiterstege (2, 3, 4) durch Verbindungsstege (17) miteinander verbunden sind und dass die Verbindungsstege nach dem Befestigen oder Einbetten oder Umspritzen der Leiterstege (2, 3, 4) an dem oder. in dem Träger (1) ausgestanzt oder ausgeschnitten werden.

16. Verfahren nach Anspruch 13 oder 14, **dadurch** ge - kennzeichnet, dass als Bauelemente (10) oder Leuchtdioden (9) SMT-Bauteile eingesetzt werden.

17. Verfahren nach Anspruch 16 in Verbindung mit Anspruch 15, **dadurch gekennzeichnet, dass** die Bauteile (9, 10) im Induktionslötverfahren mit den Leiterstegen (2, 3, 4) kontaktiert werden.

18. Verfahren nach Anspruch 13 oder 14, **dadurch** ge - kennzeichnet , dass mit den Leiterstegen (3, 4) die Stromversorgungsleitungen (7, 8) durch Widerstandsschweißen kontaktiert werden.

19. Verfahren nach Anspruch 13 oder 14, **dadurch** ge - kennzeichnet , dass die Bauelemente (10) vor dem Kontaktieren in Bezug auf die Leuchtdiode (9) im Einzelabgleich elektrisch vermessen und angepasst eingesetzt werden.
